# FASCICULE DE BREVET EUROPEEN

(11) **EP 0 486 342 B1**
(45) Date de publication et mention de la délivrance du brevet: **29.12.1993**
(21) Numéro de dépôt: 91402806.3
(22) Date de dépôt: 22.10.1991
(51) Int. Cl.: B60T 8/18

(54) **Compensateur de freinage**
Bremsdruckregler
Brake pressure corrector

(30) Priorité: 13.11.1990 FR 9014062
(43) Date de publication de la demande: 20.05.1992
(73) Titulaire: ALLIEDSIGNAL EUROPE SERVICES TECHNIQUES, 93700 Drancy (FR)
(72) Inventeur: Longuet, Marc, Bendix Europe Services Techniques, F-93700 Drancy (FR); Perrin, Alain, Bendix Europe Services Techniques, F-93700 Drancy (FR); Bourgois, Lionel, Bendix Europe Services Tech., F-93700 Drancy (FR)
(74) Mandataire: Bentz, Jean-Paul

(56) Documents cités:
- GB-A- 2 158 902
- GB-A- 2 160 605
- GB-A- 2 172 354

## Description

La présente invention concerne les compensateurs de freinage asservis à la charge pour véhicule automobile permettant de modifier la répartition du freinage entre l'essieu avant et l'essieu arrière en fonction de la charge du véhicule ainsi asservi.

Ces compensateurs de freinage sont bien connus de l'homme du métier et leurs modes de fonctionnement ne seront pas décrit ici. De façon classique, un tel compensateur inclut une partie fixe solidaire du châssis comprenant au moins une valve correctrice pourvue d'un levier de commande monté pivotant dont une extrémité est associée à un essieu par l'intermédiaire d'un dispositif à ressort précontraint dont la longueur est pré-réglée au moyen d'une entretoise provisoire avant de fixer une de ses extrémités à cet essieu, l'autre extrémité du dispositif à ressort étant solidaire d'une tige coulissante dans une ouverture pratiquée à l'extrémité du levier.

Par exemple, le document GB-A-2 160 605 décrit un compensateur comprenant :
- une partie fixe solidaire du châssis ;
- une valve correctrice pourvue d'un levier de commande monté pivotant sur la partie fixe ;
- un dispositif à ressort présentant une extrémité en crochet liée audit essieu et une extrémité libre enfilée dans une ouverture pratiquée dans une extrémité du levier de commande, ce dispositif à ressort comprenant lui-même :
- une tige dont une extrémité est liée et dont l'autre est libre et forme ladite extrémité libre du dispositif à ressort ;
- un premier ressort reliant ladite extrémité liée de la tige à l'extrémité en crochet du dispositif à ressort ;
- une entretoise amovible maintenant le premier ressort dans un état précontraint à une longueur pré-réglée ; et
- des moyens de fixation de l'extrémité libre de la tige sur le levier de commande, ces moyens de fixation incluant un second ressort solidaire de la tige en un point de liaison, et des moyens de serrage de la tige susceptibles, avant serrage, de coulisser sur cette tige par rapport au point de liaison.

Bien que le dispositif à ressort d'un tel compensateur puisse être mis en place sans avoir à régler la longueur utile de la tige par un vissage fastidieux d'un écrou sur une partie filetée de celle-ci, il requiert en revanche la présence de deux épaulements filetés destinés à recevoir le second ressort par vissage, et sa mise en place nécessite le vissage de ce second ressort dans l'épaulement qui est situé, par rapport au levier de commande, du côté opposé au côté accessible, la mise en place de ce dispositif à ressort restant donc quelque peu délicate, et le second ressort devant rester à demeure sur le véhicule bien qu'il ne serve qu'au montage.

L'invention a pour but de remédier aux inconvénients mentionnés ci-dessus.

A cette fin le compensateur de l'invention est essentiellement caractérisé en ce que le second ressort travaille en compression et se trouve disposé sur l'extrémité libre de la tige, au-delà de l'ouverture du levier de commande par rapport au premier ressort, et en ce qu'au moins une prédécoupe est en outre pratiquée dans la tige sensiblement perpendiculairement à son axe pour ôter le second ressort et l'extrémité inutile de la tige après serrage desdits moyens de serrage.

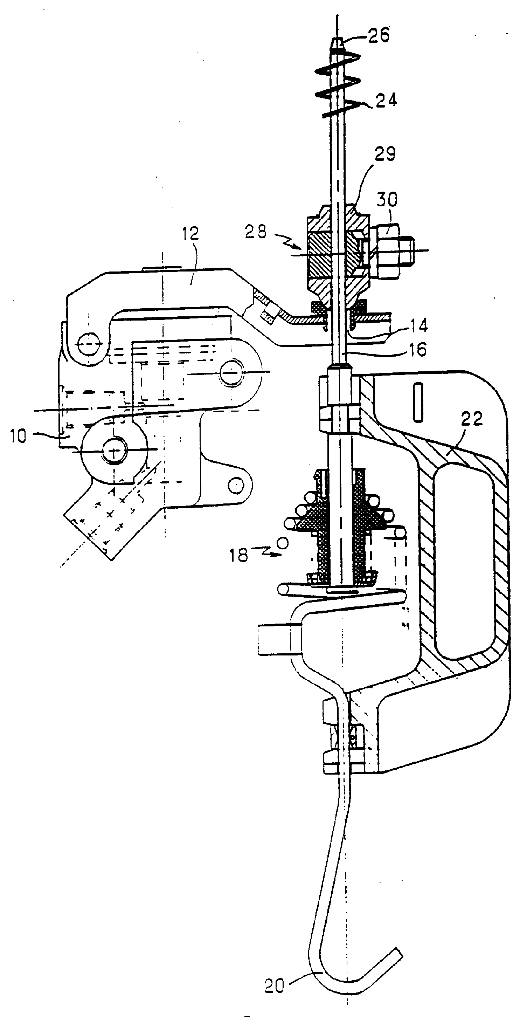

L'invention sera mieux comprise et d'autres buts, avantages et caractéristiques de celle-ci apparaîtront plus clairement à la lecture de la description qui suit d'un mode de réalisation donné à titre non limitatif et à laquelle est jointe une planche de dessin sur laquelle :
- La Figure Unique représente schématiquement et partiellement en coupe un compensateur conforme à la présente invention.

En référence maintenant à cette Figure, le compensateur comprend une partie fixe 10 fixée au châssis du véhicule et comprenant les valves correctrices de pression de freinage habituelles. Un levier de commande 12 monté pivotant sur la partie 10 permet d'ajuster le point de coupure des valves correctrices en fonction de la charge du véhicule.

L'extrémité du levier 12 comporte une ouverture 14 traversée par une tige 16 solidaire d'un dispositif à ressort 18 dont l'extrémité 20 est constituée par un crochet destiné à être accroché à un essieu du véhicule.

Le dispositif à ressort 18 est du type à ressort précontraint dont la longueur est pré-réglée au moyen d'une entretoise provisoire 22 lors de l'assemblage du compensateur. Cette entretoise 22 est bien évidemment, ôtée lorsque le compensateur est monté sur un véhicule.

La tige 16 est susceptible de coulisser dans l'ouverture 14, et un moyen élastique tel le ressort hélicoïdal 24 rappelle le dispositif à ressort 18 vers le levier 12. Dans l'exemple représenté, une extrémité de ce ressort 22 est fixée à l'extrémité libre 26 de la tige 16, tandis que l'autre extrémité du ressort prend appui indirectement sur le levier 12.

Un moyen de verrouillage 28 est prévu pour immobiliser la tige en coulissement avant d'ôter l'entretoise provisoire 22. Ce moyen de verrouillage est ici constitué par une bague 29 pourvu d'un moyen de serrage 30 dont l'axe est perpendiculaire à celui de la tige 16. Ce moyen de serrage 30 est une vis coopérant avec la bague 29 pour mordre la tige 16.

On comprendra ainsi que la mise en place de ce compensateur sur un véhicule est grandement facilitée par rapport à celle du compensateur du document précité.

En effet, l'accrochage du crochet 20 dans l'oeillet non représenté prévu sur l'essieu du véhicule ne pose pas de problème du fait que la tige 16 peut coulisser. Le moyen élastique 24 rappelle ensuite automatiquement l'équipage en position appropriée sans qu'il soit nécessaire de tourner un écrou fastidieux dans une zone peu accessible pour un opérateur. L'ensemble est ensuite verrouillé grâce au moyen de verrouillage précité 28 d'un accès aisé.

De préférence la partie du moyen de verrouillage 28 en contact avec le levier 12 affecte une forme partiellement sphérique pour favoriser le mouvement de pivotement de la tige 16 par rapport au levier 12 comme il est connu dans l'art.

Par ailleurs, une pré-découpe de la tige perpendiculairement à son axe est prévue pour réduire la longueur de la partie de la tige 16 non active après mise en place du compensateur, celle-ci comportant donc une étape finale au cours de laquelle l'extrémité 26 de la tige, devenue inutile, sera coupée et le moyen élastique 24 sera ôté.

## Revendications

1. Compensateur de freinage asservi à la charge d'un véhicule comportant un châssis et au moins un essieu, ce compensateur comprenant :
- une partie fixe (10) solidaire du châssis ;
- une valve correctrice pourvue d'un levier de commande (12) monté pivotant sur la partie fixe ;
- un dispositif à ressort présentant une extrémité en crochet (20) liée audit essieu et une extrémité libre (26) enfilée dans une ouverture (14) pratiquée dans une extrémité du levier de commande, ce dispositif à ressort comprenant lui-même :
- une tige (16) dont une extrémité est liée et dont l'autre est libre et forme ladite extrémité libre du dispositif à ressort ;
- un premier ressort (18) reliant ladite extrémité liée de la tige à l'extrémité en crochet du dispositif à ressort ;
- une entretoise amovible (22) maintenant le premier ressort (18) dans un état précontraint à une longueur pré-réglée ; et
- des moyens de fixation de l'extrémité libre de la tige sur le levier de commande, ces moyens de fixation incluant un second ressort (24) solidaire de la tige en un point de liaison, et des moyens de serrage de la tige (28, 29, 30) susceptibles, avant serrage, de coulisser sur cette tige par rapport au point de liaison,
caractérisé en ce que le second ressort travaille en compression et se trouve disposé sur l'extrémité libre de la tige, au-delà de l'ouverture (14) du levier de commande par rapport au premier ressort, et en ce qu'au moins une prédécoupe est pratiquée dans la tige (16) sensiblement perpendiculairement à son axe pour ôter le second ressort (24) et l'extrémité inutile de la tige après serrage desdits moyens de serrage.

## Patentansprüche

1. Bremsdruckregler, der von der Beladung eines Fahrzeugs, das ein Chassis und wenigstens eine Achse enthält, beeinflußt wird, wobei der Druckregler enthält:
- einen mit dem Chassis verbundenen, feststehenden Abschnitt (10);
- ein Korrekturventil, das mit einem schwenkbar am feststehenden Abschnitt angebrachten Steuerhebel (12) versehen ist; und
- eine Federvorrichtung, die ein als Haken (20) ausgebildetes, mit der Achse verbundenes Ende und ein freies Ende (26) aufweist, das durch eine in einem Ende des Steuerhebels ausgebildete Öffnung (14) eingesteckt ist, wobei diese Federvorrichtung enthält:
- eine Stange (16), deren eines Ende verbunden und deren anderes Ende frei ist und das freie Ende der Federvorrichtung bildet;
- eine erste Feder (18), die das verbundene Ende der Stange mit dem mit dem Haken versehenen Ende der Federvorrichtung verbindet;
- einen abnehmbaren Zwischenträger (22), der die erste Feder (18) in einem vorgespannten Zustand von vorher eingestellter Länge hält; und
- Befestigungsmittel zum Befestigen des freien Endes der Stange am Steuerhebel, wobei diese Befestigungsmittel eine zweite, an der Stange in einem Verbindungspunkt angebrachte Feder (24) und Stangenfestspannmittel (28, 29, 30) enthalten, die vor dem Festspannen auf der Stange bezüglich des Verbindungspunktes gleiten können,
dadurch gekennzeichnet, daß die zweite Feder eine Druckfeder ist und am freien Ende der Stange bezüglich der ersten Feder jenseits der Öffnung (14) des Steuerhebels angeordnet ist, und daß in der Stange (16) ein im wesentlichen zu ihrer Achse senkrecht angeordneter Einschnitt ausgebildet ist, um nach dem Anziehen der Festspannmittel die zweite Feder (24) und das überflüssige Ende der Stange zu entfernen.

## Claims

1. Load-controlled brake compensator for a vehicle comprising a chassis and at least one axle, said compensator comprising:
- a fixed part (10) solidly attached to the chassis;
- a compensating valve provided with a control lever (12) pivotingly mounted on the fixed part;
- a spring device having a hook-shaped end (20) connected to the said axle and a free end (26) inserted into an opening (14) made in one end of the control lever, this spring device itself comprising:
- a rod (16), one end of which is attached and the other end of which is free and forms said free end of the spring device;
- a first spring (18) connecting the said attached end of the rod to the hook-shaped end of the spring device;
- a removable strut (22) which maintains the first spring (18) in a preloaded state at a preset length; and
- means for fixing the free end of the rod on the control lever, these fixing means including a second spring (24) solidly attached to the rod at a point of attachment and means for clamping the rod (28, 29, 30) which are capable, before tightening of sliding on this rod in relation to the point of attachment,
characterized in that the second spring operates in compression and is disposed on the free end of the rod, on the other side of the opening (14) in the control lever from the first spring, and in that at least one pre-cutout is furthermore made in the rod (16), substantially perpendicularly to its axis, for the removal of the second spring (24) and the redundant end of the rod after the tightening of the said clamping means.
